# EUROPÄISCHE PATENTSCHRIFT

(11) **EP 3 243 592 B1**
(45) Veröffentlichungstag und Bekanntmachung des Hinweises auf die Patenterteilung: **26.09.2018**
(21) Anmeldenummer: 16001076.5
(22) Anmeldetag: 12.05.2016
(51) Int. Cl.: B23D 57/00

(54) **MOBILE VORRICHTUNG ZUM ZERKLEINERN VON SPERRGUT**
MOBILE DEVICE FOR CRUSHING BULKY ARTICLES
DISPOSITIF MOBILE DE BROYAGE DE DECHETS

(43) Veröffentlichungstag der Anmeldung: 15.11.2017
(73) Patentinhaber: Veolia Umweltservice West GmbH, 32049 Herford (DE)
(72) Erfinder: HÖSLER, Edgar, 32549 Bad Oeynhausen (DE); GROTE, Torsten, 32694 Dörentrup (DE)
(74) Vertreter: Meissner Bolte Partnerschaft mbB

(56) Entgegenhaltungen:
- DE-A1- 3 041 830
- DE-U1-202015 003 559
- GB-A- 2 206 521
- US-A- 3 220 149
- US-A- 5 690 092

## Beschreibung

Die Erfindung betrifft eine mobile Vorrichtung zum Zerkleinern von wenigstens einen faserverstärkten Kunststoff aufweisendem Sperrgut, insbesondere von Rotorblättern für Windkraftanlagen, mit wenigstens einer Seilsäge mit Sägeseil, mit einem Bewässerungssystem zum Abgeben einer Flüssigkeit zum Kühlen des Sägeseils, mit einem Auffangbecken zum Auffangen der Flüssigkeit.

Sperrgut, wie beispielsweise Rotorblätter von Windkraftanlagen, wird für eine Entsorgung bisher als ganzes Bauteil oder grob unterteilte Stücke zu einem zentralen Platz, wie beispielsweise einem Entsorgungsbetrieb, beim Windkrafthersteller oder einer Deponie, transportiert und dort zerteilt und mittels großen Maschinen zerkleinert.

Insbesondere bei Rotorblättern von Windkraftanlagen, deren Rotorlängen immer größer werden, gestaltet sich der Transport als schwierig. Solch zu entsorgendes Sperrgut fällt an. wenn bei der Produktion der Rotorblätter die Qualitätserfordernisse nicht erreicht werden oder wenn eine Windkraftanlage beispielsweise aufgrund des Erreichens ihrer maximalen Lebensdauer demontiert werden muss.

Der Transport stellt hierbei ein erheblicher Kostenpunkt dar, da insbesondere bei unzerteilten Rotorblättern genehmigungspflichtige Sondertransporte notwendig sind.

Es ist somit wünschenswert, solch Sperrgut vor Ort bereits derart zerteilt wird, dass die dann entstehenden Stücke direkt vor Ort oder mittels Transporten an einer anderen Stelle direkt einer Zerkleinerung zugeführt werden können.

Problematisch ist hierbei insbesondere, dass bei der Zerkleinerung sämtliche Umweltstandards eingehalten werden müssen.

Eine erste Lösung für eine solche mobile Anwendung der Zerkleinerung ist aus der EP 2 420 339 A1 bekannt. Hierbei wird ein mit einem Sägeblatt in Form einer Kreissäge versehener Minibagger eingesetzt, um ein auf Böcken angeordnetes Rotorblatt in kleinere Einheiten zu zerkleinern. Im Schneidbereich wird eine Flüssigkeit abgegeben, um Staub zu binden und das Sägeblatt zu kühlen. Unter dem Rotorblatt ist eine Auffangvorrichtung vorgesehen, in der Wasser und Späne aufgefangen werden. Die dafür notwendige Technik ist auf einem weiteren Fahrzeug vorgesehen. Es hat sich gezeigt, dass der Einsatz von Sägeblättern, insbesondere Kreissägen im Hinblick auf die Materialien, aus denen ein Rotorblatt zusammengesetzt ist, unvorteilhaft ist.

Aus der DE 20 2015 003 559 U1 ist eine Vorrichtung zum Zerteilen von Rotorblättern für Windkraftanlagen bekannt. Diese weist eine Seilsäge auf, die über Umlenkrollen zu einem Rahmen aufgespannt ist. Die Größe des Rahmens ist einstellbar. Der Rahmen ist auf einem mobilen Basiselement angeordnet, auf dem er über einen Antrieb verfahrbar ist. Zum Schneiden wird der Rahmen in Richtung des Rotorblatts bewegt. Dabei können die Rahmenelemente unterhalb und oberhalb des Rotorblatts an diesem entlang fahren. Nach Beendigung des Schneidvorgangs wird die gesamte Einheit mittels eines entsprechenden Geräts aufgenommen und zum nächsten Schnittpunkt verfahren. Zur Einhaltung der Umweltstandards sind eine Flüssigkeitsabgabevorrichtung zum Kühlen und Staubbinden und eine Auffangvorrichtung vorgesehen. Diese muss jeweils ebenfalls mit entsprechend verfahren werden. Das gesamte Zerschneiden für sich genommen gestaltet sich hier sehr aufwendig.

Aufgabe der Erfindung ist es, eine mobile Vorrichtung zum Zerkleinern von Sperrgut zu schaffen, mit der die Zerkleinerung vor Ort zügig und sicher durchgeführt werden kann.

Gelöst wird die Aufgabe dadurch, dass ein Auflager für das Sperrgut im Bereich des Sägeseils vorgesehen ist, dass das Auflager wenigstens ein als Rollen ausgeführtes Lagerelement aufweist, das in Höhe und/oder Neigung verstellbar ist, und dass ein verfahrbar Transportwagen vorgesehen ist, der ein Auflager für ein vom Bereich des Sägeseils abgewandten Ende des Sperrguts aufweist.

Hierdurch ist es auf einfache und sichere Weise möglich, das Zerkleinern des Sperrgutes vorzunehmen. Gleichzeitig ist es möglich, die Rüstzeiten während des Zerkleinerns gering zu halten.

Eine weitere Lehre der Erfindung sieht vor, dass das Sägeseil mittels Seilumlenkrollen geführt ist. Eine weitere Lehre der Erfindung sieht vor, dass die Seilumlenkrollen wenigstens teilweise im Bereich des Auffangbeckens angeordnet sind. Eine weitere Lehre der Erfindung sieht vor, dass das Auffangbecken mehrere Anschlagpunkte für die Seilumlenkrollen, bevorzugt in Abhängigkeit der Geometrie des Sperrguts, aufweist. Hierdurch ist es möglich, das Sägen sicher durchzuführen und gleichzeitig entsprechend eine gut Anpassbarkeit bereitzustellen.

Eine weitere Lehre der Erfindung sieht vor, dass wenigstens zwei Seilumlenkrollen an jeweils einem verfahrbaren Laufwagen angeordnet sind. Eine weitere Lehre der Erfindung sieht vor, dass wenigstens ein Laufwagen antreibbar ist. Dabei ist vorteilhaft, dass wenigstens ein Laufwagen oberhalb des Sperrguts, bevorzugt an einem ein Balken oberhalb des Sägeseils vorgesehen ist. Mit dieser Ausführungsform wird auf besonders einfache Weise eine definierte Sageseilausrichtung möglich.

Eine weitere Lehre der Erfindung sieht vor, dass das Sperrgut während des Zerteilens mittels einer Sicherungsvorrichtung in der Vorrichtung arretierbar ist, bei der es sich bevorzugt um eine oberhalb des Auflagers angeordnete Anpressrolle oder um eine Seilspannvorrichtung handelt.

Eine weitere Lehre der Erfindung sieht vor, dass die Lagerelemente und/oder der Transportwagen antreibbar sind. Eine weitere Lehre der Erfindung sieht vor, dass das Auflager des Transportwagens wenigstens ein Lagerelement aufweist, das in Höhe und/oder Neigung verstellbar ist. Hierdurch wird es auf besonders einfache Weise möglich, einen definierten Vorschub des Sperrgutes bereitzustellen, um ein Umsetzen der Vorrichtung zwischen den einzelnen Zerkleinerungsschritten zu vermeiden. Weiterhin kann das Sperrgut auf einfache Weise hinreichend in der Vorrichtung ausgerichtet werden.

Eine weitere Lehre der Erfindung sieht vor, dass es sich bei dem Auffangbecken um einen Container, insbesondere um eine Abrollcontainer, handelt, an dem bevorzugt wenigstens ein Element zur Vergrößerung der Grundfläche, besonders bevorzugt klappbar, angeordnet ist. Hierdurch wird es möglich, eine gute Transportierbarkeit der Vorrichtung bereitzustellen.

Eine weitere Lehre der Erfindung sieht vor, dass das Bewässerungssystem wenigstens ein Sprühelement zur Staubbindung/Staubniederhaltung aufweist. Eine weitere Lehre der Erfindung sieht vor, dass das Auffangbecken ein Abscheideelement zum Abscheiden von beim Zerkleinern gelösten Partikeln aus der Flüssigkeit aufweist. Hierdurch wird es möglich, auf einfache Weise ein sicheres und umweltverträgliches Zerkleinern zu bewirken.

Eine weitere Lehre der Erfindung sieht vor, dass mittels einer Wasseraufbereitung anfallende Prozesswässer aus Kühlung der Seilsäge und der Sprühbedüsung derart aufbereitet werden, dass diese direkt im Prozess wieder zur Kühlung und Staubniederhaltung eingesetzt werden können. Dadurch werden erhebliche Mengen an Frischwasser für die Prozesse eingespart.

Eine weitere Lehre der Erfindung sieht vor, dass ein Balken oberhalb des Sägeseils angeordnet ist, an dem das Sprühelement vorgesehen ist, der bevorzugt in Höhe und Neigung verstellbar ist und/oder der bevorzugt als Schutzelement im Hinblick auf ein Reißen des Sägeseils ausgeführt ist.

Eine weitere Lehre der Erfindung sieht vor, dass die Seilsäge mindestens einen Seilspeicher und/oder mindestens einen Seilspannelement aufweist.

Eine weitere Lehre der Erfindung sieht vor, dass das Antreiben hydraulisch erfolgt.

Die Erfindung wird anhand eines bevorzugten Ausführungsbeispiels mittels einer Zeichnung näher erläutert. Dabei zeigen:
- Fig. 1: eine räumliche Ansicht einer erfindungsgemäßen Vorrichtung,

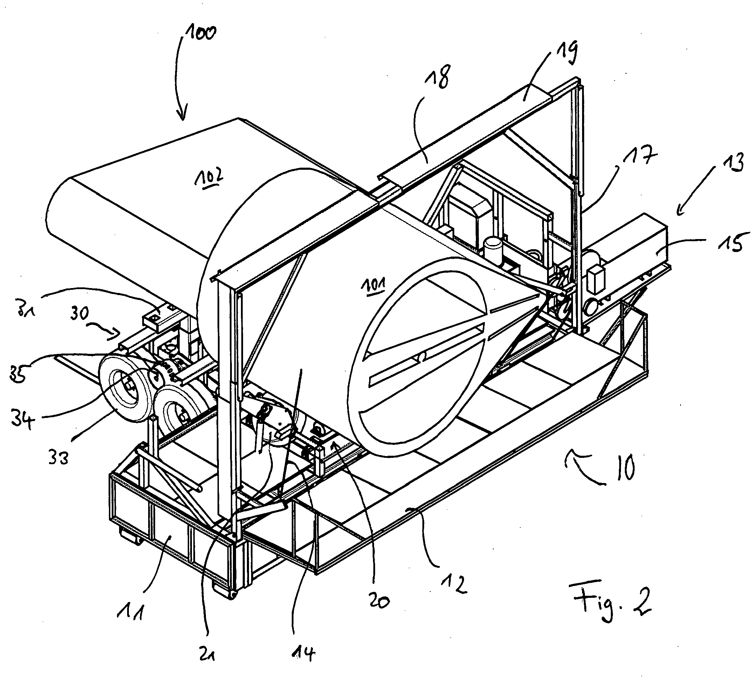

- Fig. 2: eine alternative Ansicht zu Fig. 1,
- Fig. 3: eine Seitenansicht zu Fig. 1,
- Fig. 4: eine Schnittansicht analog Fig. 3,

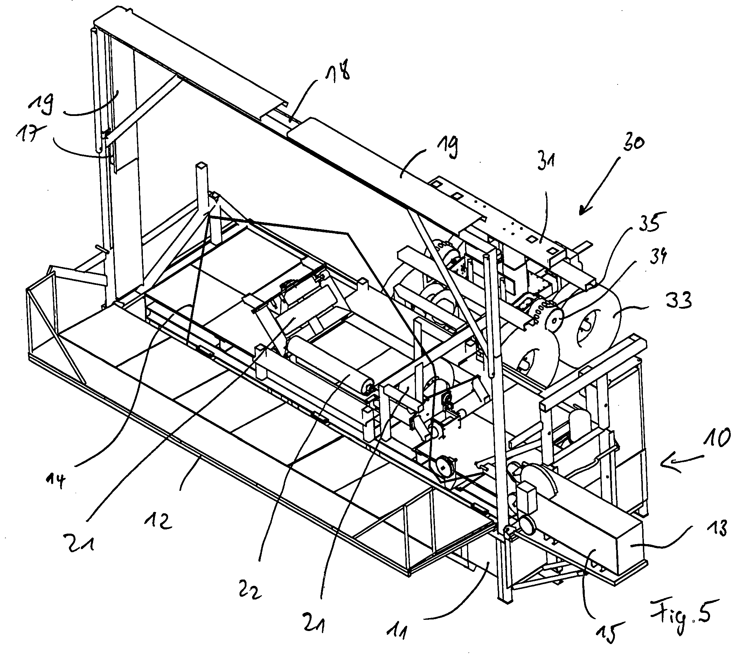

- Fig. 5: eine alternative Ansicht zu Fig. 1 ohne angedeutetes Rotorblatt,

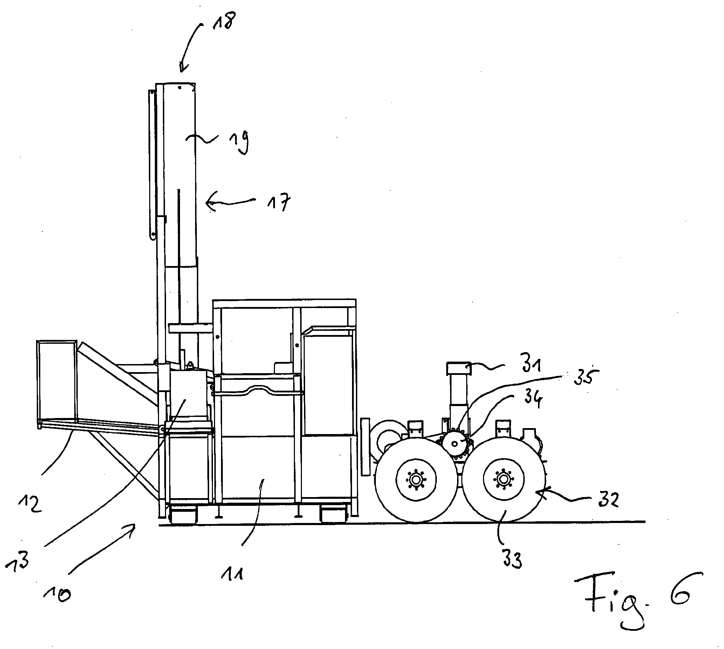

- Fig. 6: eine Seitenansicht zu Fig. 5,

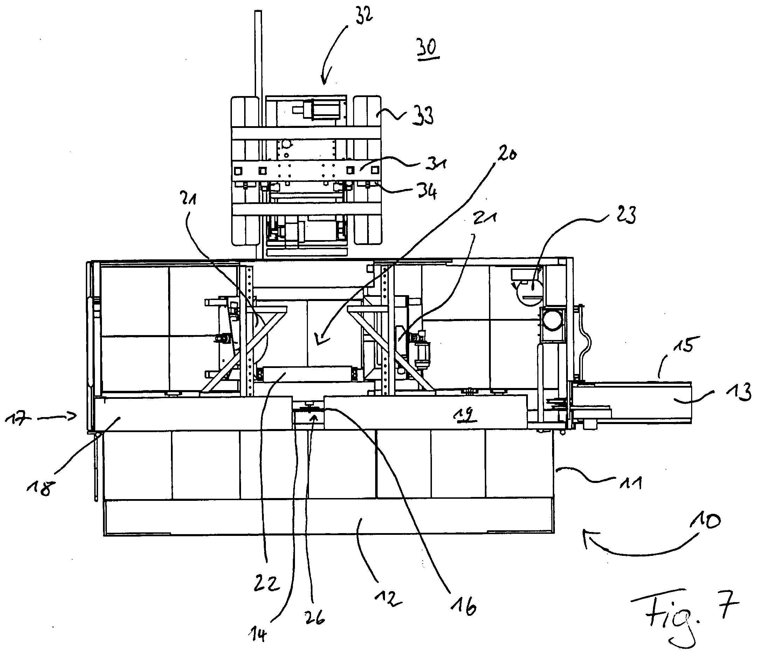

- Fig. 7: eine Draufsicht zu Fig. 5,
- Fig. 8: eine weitere Seitenansicht zu Fig. 5,
- Fig. 9: eine alternative Ausführungsform zu Fig. 1,
- Fig. 10: eine Seitenansicht eines erfindungsgemäßen Transportwagens,
- Fig. 11: eine Alternative Seitenansicht zu Fig. 10,
- Fig. 12: eine Draufsicht zu Fig. 10, und
- Fig. 13: eine räumliche Ansicht zu Fig. 10.

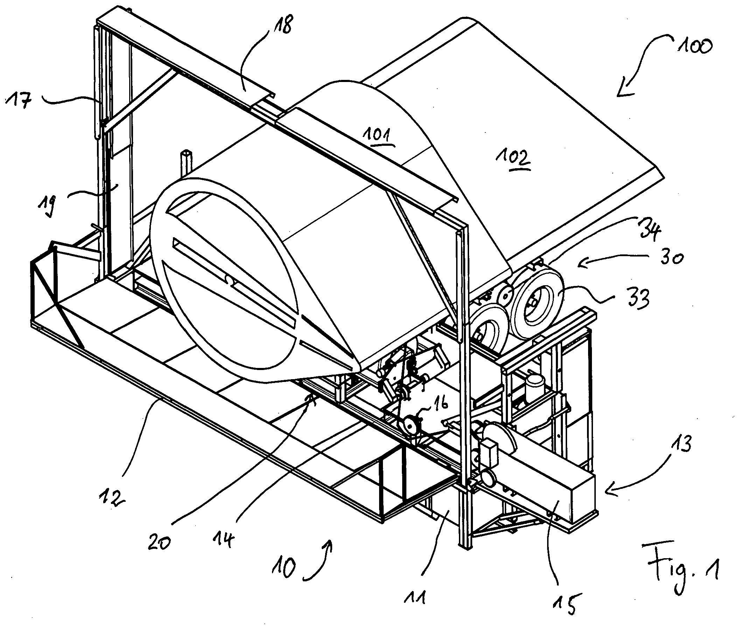

Fig. 1 zeigt eine erfindungsgemäße Vorrichtung 10 zum Zerkleinern eines Rotorblatts 100 als Sperrgut, dargestellt mit einer schematisch dargestellten Außenhülle 101 und einem Kern 102.

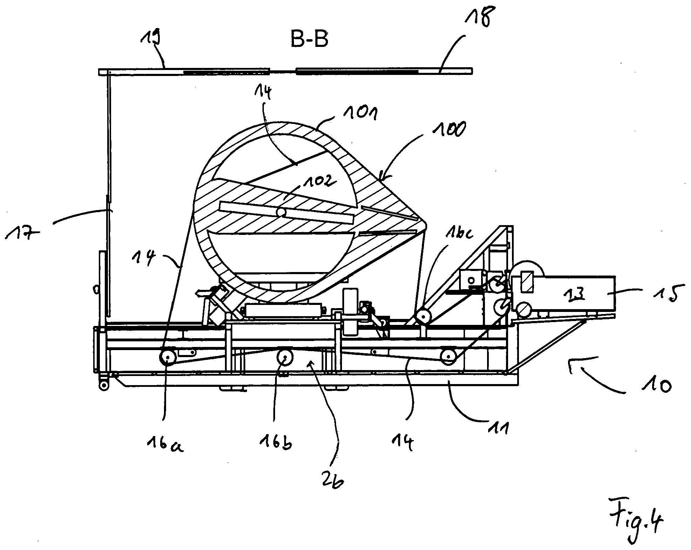

Die Vorrichtung 10 weist eine Basis 11 in Form eines Containers auf, dessen Innenraum 26 entweder als eine Auffangwanne für eine Flüssigkeit fungiert, oder in der eine entsprechende Wanne (nicht dargestellt) vorgesehen ist. Am Container 11 ist eine Klappfläche 12 vorgesehen, die während des Zerkleinerungsbetriebs/Sägebetriebs horizontal aufgestellt ist. Die Vorrichtung 10 weist eine Seilsäge 13 mit einem Antrieb (nicht dargestellt), einem Sägeseil 14, einem Seilspeicher 15 sowie einer Seilspannvorrichtung (nicht dargestellt) auf. Das Sägeseil 14 ist über Umlenkrollen 16 (siehe Fig. 4) um das Rotorblatt 100 aufgespannt. Während des Schneidens wird die Seilsäge 14 vom Seilantrieb 15 angetrieben und läuft endlos um. Dabei sägt sich das Sägeseil in das Rotorblatt 100, und trennt dieses durch, indem es einen Schnitt 103 im Rotorblatt 100 erzeugt.

Oberhalb des Schneidbereichs ist ein auf zwei Stützen 17 gelagerter Balken 18 vorgesehen, an dem nicht dargestellte Sprühdüsen zur Abgabe einer Flüssigkeit zum Binden von beim Zerkleinern/Sägen gelöstem Staub aufweist. Weiterhin ist der Balken 18 und sind die Stützen 17 bevorzugt so ausgeführt, dass Bleche 19 vorgesehen sind, die als Prallschutz für ein eventuell reißendes Sägeseil 14 dienen. Der Balken 18 ist über eine geeignete Vorrichtung, beispielsweise Zylinder, höhenverstellbar vorgesehen. Hierüber lässt sich der Abstand der Sprühdüsen zum Schneidbereich einstellen. Weiterhin lässt sich der Balken entweder alleine oder in Verbindung mit den Stützen 17 gegenüber dem Container 11 neigen bzw. für den Transport wegklappen.

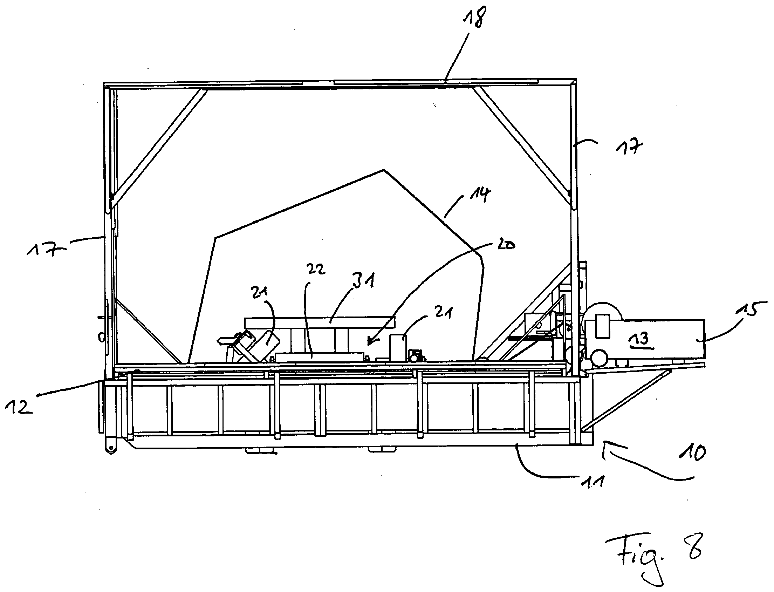

Der Container 11 ist mit einem Auflager 20 versehen, das Lagerelemente 21 aufweist, die angetrieben sind und in ihrer Neigung, beispielsweise über Zylinder, verstellbar sind. Um eine gute Haftung im Hinblick auf das Rotorblatt 100 zu erhalten, weisen Lagerelemente 21 bevorzugt eine Gummibereifung auf. Zusätzlich ist ein Lagerelement 22 vorgesehen, das mittig und horizontal im Auflager 20 angeordnet ist. Dieses Lagerelement ist als Rolle ausgeführt. Es kann ebenfalls einen Antrieb aufweisen. Je nach Kontur des Rotorblatts 100 lassen sich die Lagerelemente 21 gegenüber der Horizontalen entsprechend neigen, um einen adäquaten Vortrieb bereitstellen zu können und gleichzeitig auch gewährleisten zu können, dass die abgegebenen Flüssigkeiten zur Staubbindung und zur Kühlung in den Container 11 zusammen mit den gelösten Partikeln abfließen. Die unterschiedlichen Neigungsanordnungen im Hinblick auf das Lagerelement 21 sind beispielsweise in Fig. 8 ersichtlich.

Für Sonderbauteile können in diesem Bereich auch alternative Auflager 20 vorgesehen werden.

Zum Zuführen der Flüssigkeiten zum Kühlen und zum Staubbinden sind nicht dargestellte Leitungen und Abgabedüsen vorgesehen. Weiterhin befindet sich im Container 11 ein Partikelabscheider 23, der mit wenigstens einer Pumpe (nicht dargestellt) verbunden ist.

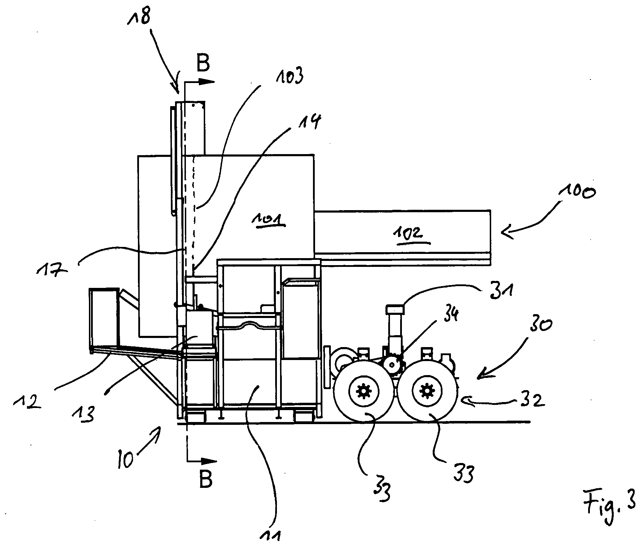

In Fig. 4 ist ein Schnitt entlang der Linie B-B gemäß Fig. 3 dargestellt. Sichtbar sind die Umlenkrollen 16 insbesondere im Container 11 angeordnet. Die Umlenkrollen 16a, 16b und 16c sind je nach Größe des Sperrguts/Rotorblatts 100 an verschiedenen Anschlagpunkten (nicht dargestellt) so anordbar, dass eine optimale Führung des Sägeseils 14 bei gleichzeitig optimaler Seilspannung und Seilausrichtung möglich ist.

Weiterhin weist die Vorrichtung 10 eine Sicherungsvorrichtung (nicht dargestellt) auf. Hiermit wird ein Verrutschen des Sperrguts im Bereich des Auflagers 20 während oder nach Beendigung des Sägevorgangs vermieden. Hierfür kann beispielsweise eine Seilwinde mit einem entsprechenden Stahlseil vorgesehen sein, die das Rotorblatt 100 entsprechend verspannt. Alternativ kann am Balken 18 oder an einer weiteren das Rotorblatt 100 von oben umgreifenden Konstruktion ein Anpresselement, beispielsweise auch eine Anpressrolle, vorgesehen sein, die höhenverstellbar ist, und mit der eine entsprechende Verspannung des Rotorblatts 100 gegenüber der Vorrichtung 10 bzw. dessen Auflager 20 erfolgen kann.

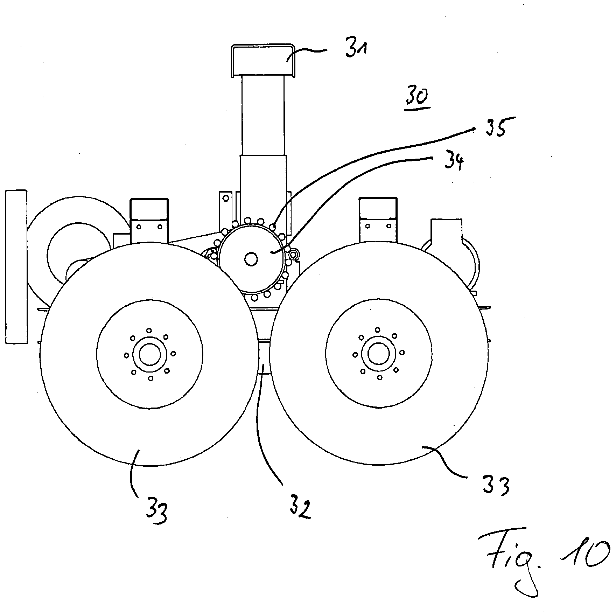

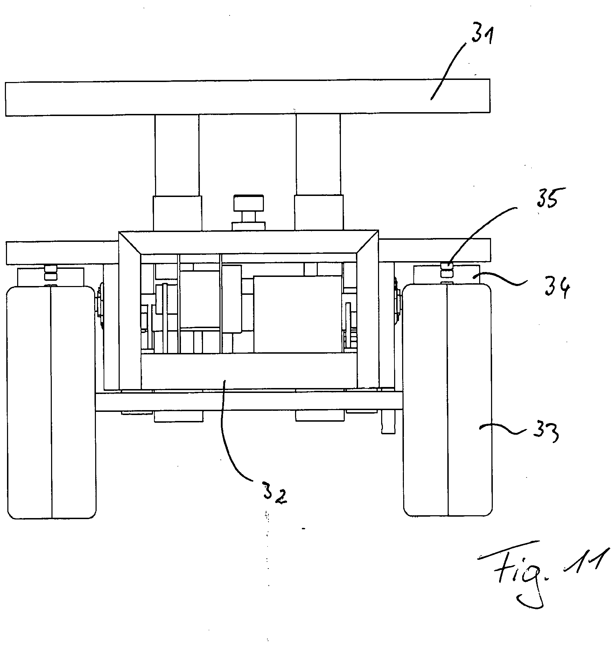

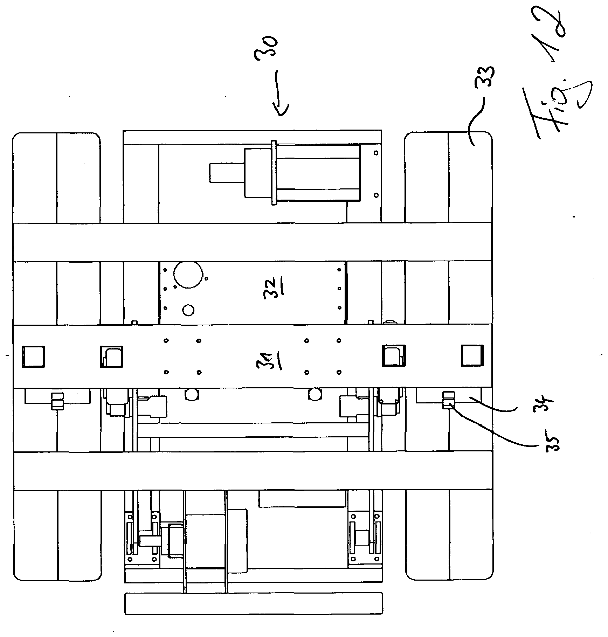

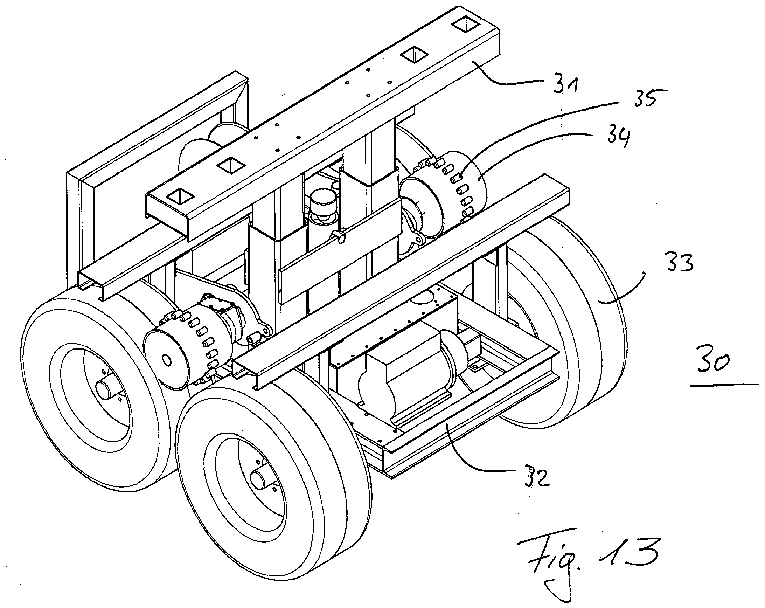

Fig. 10 bis 13 zeigen einen Transportwagen 30 mit einem Auflager 31, das gegenüber der Basis 32 des Transportwagens 30 höhenverstellbar ausgeführt ist. Über weitere, nicht dargestellte Elemente ist auch ein Neigen des Auflagers 31 möglich. Der Transportwagen 30 weist Räder 33 auf, die antreibbar ausgeführt sind. Hierfür ist beispielsweise ein Elektroantrieb oder ein Hydraulikantrieb einsetzbar. Entweder sind die Räder 33 direkt angetrieben oder weisen alternativ oder zusätzlich Antriebe 34 auf, die über Vorsprünge 35 direkt in die Räder 33 eingreifen.

Durch die Höhenverstellbarkeit des Auflagers 31 des Transportwagens 30 und gegebenenfalls über die Neigungsänderung derselben, wird das Rotorblatt so angeordnet, dass abgegebene Flüssigkeiten und mitgeführte Partikel in den Container 11 abfließen.

Die Steuerung des Transportwagens 30 erfolgt bevorzugt über eine Fernsteuerung, insbesondere per Funk. Die Energieversorgung kann beispielsweise elektrisch per Kabel mit der Energieversorgung der Vorrichtung 10 erfolgen. Alternativ zu den Rädern 33 ist auch ein Kettenantrieb denkbar.

Nach Beendigung des Schneidvorgangs wird der abgetrennte Teil des Sperrguts (nicht dargestellt) aus dem Bereich des Sägeseils 14 entnommen, und die Sicherungsvorrichtung wird gelöst. Anschließend werden entweder der Transportwagen 30 und/oder die Lagerelemente 21, 22 angetrieben, so dass das Rotorblatt 100 im Sägebereich nach vorne verfahren wird, bis eine entsprechende Länge zum Absägen des Sperrguts eingestellt ist. Anschließend wird das Rotorblatt 100 wieder mit der Sicherungsvorrichtung arretiert.

Zum Vorbereiten des Sägens wird das Sägeseil 14 wieder aufgelegt. Durch Betätigung der Seilspannvorrichtung bzw. des Seilspeichers 15 wird das Sägeseil 14 anschließend um das Rotorblatt 100 gespannt, so dass es sich mit diesem in Eingriff befindet. Anschließend wird entsprechend der nächste Sägedurchgang durchgeführt.

Die während des Sägens abgegebene Flüssigkeit zum Kühlen des Sägeseils 14 und zur Partikelbindung bzw. Staubbindung erfolgt über den Partikelabscheider 23, beispielsweise ein Filter, und die Pumpe im Kreislauf.

Die Vorrichtung 10 ist so konzipiert, dass die über die Basis 11 hinausstehenden Elemente bevorzugt abgeklappt werden können, so dass dieser dann beispielsweise auf einem Fahrzeug aufgeladen und entsprechend transportiert werden kann.

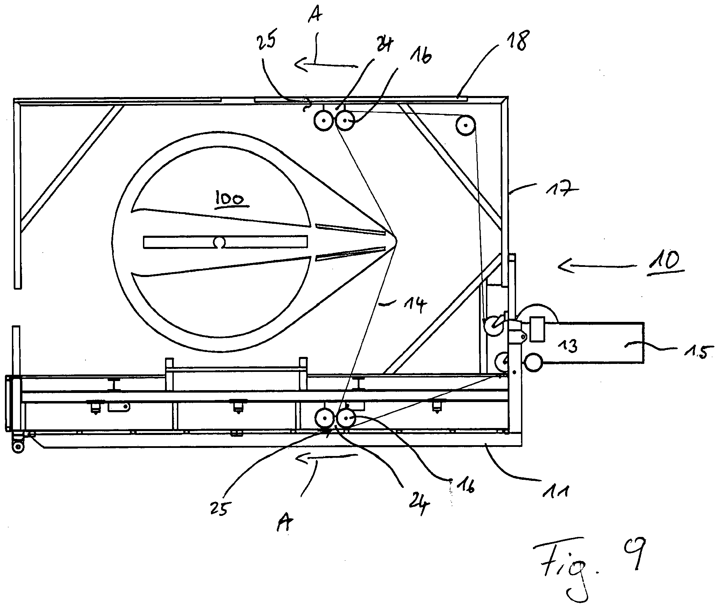

Fig. 9 zeigt eine alternative Ausführungsform der Seilsäge 13. Dabei sind am Balken 18 und im Bereich des Containers 11 Laufwagen 24 vorgesehen, die mit Umlenkrollen 16 versehen sind, und um bzw. über die das Sägeseil 14 angeordnet ist. Die Laufwagen 24 sind entlang jeweils eines Führungselements 25 horizontal verfahrbar. In der dargestellten Ausführungsform bewegen sich die Laufwagen 24 vom Seilspeicher 15 weg in Pfeilrichtung A. Das Sägeseil 14 wird dabei umlaufend betrieben, so dass in das Rotorblatt 100 ein Schnitt 103 geschnitten wird. Für das Fortbewegen der Laufwagen 24 auf den Führungselementen 25 sind verschiedene Möglichkeiten vorhanden. Dieses kann beispielsweise über Zahnstangenantriebe, Drehantriebe oder dergleichen erfolgen.

Ist das Rotorblatt 100 durchschnitten, können nach Entnahme des abgeschnittene Teils die Laufwagen 24 entweder zurück zur Ausgangsposition gefahren werden und das Schneiden in Pfeilrichtung A nach Vorschieben des Rotorblattes wiederholt werden, oder die Laufwagen 24 verbleiben in ihrer Endposition, das Rotorblatt 100 wird vorgeschoben, und das Schneiden des Rotorblatts 100 erfolgt dann entgegen der Pfeilrichtung A, indem die Laufwagen wieder in Richtung des Seilspeichers 15 während des Schneidens zurückbewegt werden.

### Bezugszeichenliste:

- 10: Vorrichtung
- 11: Basis/Container
- 12: Klappfläche
- 13: Seilsäge
- 14: Sägeseil
- 15: Seilspeicher
- 16: Umlenkrolle
- 17: Stütze
- 18: Balken
- 19: Blech
- 20: Auflager
- 21: Lagerelement
- 22: Lagerelement
- 23: Partikelabscheider
- 24: Laufwagen
- 25: Führungselement
- 26: Innenraum
- 30: Transportwagen
- 31: Auflager
- 32: Basis
- 33: Rad
- 34: Antrieb
- 35: Vorsprung
- 100: Rotorblatt
- 101: Außenhülle
- 102: Kern
- 103: Schnitt
- A: Pfeilrichtung

## Patentansprüche

1. Mobile Vorrichtung (10) zum Zerkleinern von wenigstens einen faserverstärkten Kunststoff aufweisendem Sperrgut, insbesondere von Rotorblättern (100) für Windkraftanlagen, mit wenigstens einer Seilsäge (13) mit Sägeseil (14), mit einem Bewässerungssystem zum Abgeben einer Flüssigkeit zum Kühlen des Sägeseils (14), mit einem Auffangbecken (11) zum Auffangen der Flüssigkeit, **dadurch gekennzeichnet, dass** ein Auflager (20) für das Sperrgut im Bereich des Sägeseils (14) vorgesehen ist, dass das Auflager (20) wenigstens ein als Rollen ausgeführtes Lagerelement (21) aufweist, das in Höhe und/oder Neigung verstellbar ist, und dass ein verfahrbar Transportwagen (30) vorgesehen ist, der ein Auflager (31) für ein vom Bereich des Sägeseils (14) abgewandten Ende des Sperrguts aufweist.

2. Vorrichtung nach Anspruch 1, **dadurch gekennzeichnet, dass** das Sägeseil (14) mittels Seilumlenkrollen (16) geführt ist.

3. Vorrichtung nach Anspruch 1 oder 2, **dadurch gekennzeichnet, dass** die Seilumlenkrollen (16) wenigstens teilweise im Bereich des Auffangbeckens (11) angeordnet sind.

4. Vorrichtung nach einem der Ansprüche 1 bis 3, **dadurch gekennzeichnet, dass** das Auffangbecken (11) mehrere Anschlagpunkte für die Seilumlenkrollen (16), bevorzugt in Abhängigkeit der Geometrie des Sperrguts, aufweist.

5. Vorrichtung nach einem der Ansprüche 1 bis 4, **dadurch gekennzeichnet, dass** wenigstens zwei Seilumlenkrollen (16) an jeweils einem verfahrbaren Laufwagen (24) angeordnet sind.

6. Vorrichtung nach Anspruch 5, **dadurch gekennzeichnet, dass** wenigstens ein Laufwagen (24) antreibbar ist.

7. Vorrichtung nach Anspruch 5 oder 6, **dadurch gekennzeichnet, dass** wenigstens ein Laufwagen (24) oberhalb des Sperrguts, bevorzugt an einem ein Balken (18) oberhalb des Sägeseils vorgesehen ist.

8. Vorrichtung nach einem der Ansprüche 1 bis 7, **dadurch gekennzeichnet, dass** das Sperrgut während des Zerteilens mittels einer Sicherungsvorrichtung in der Vorrichtung (10) arretierbar ist, bei der es sich bevorzugt um eine oberhalb des Auflagers (20) angeordnete Anpressrolle handelt.

9. Vorrichtung nach einem der Ansprüche 1 bis 8, **dadurch gekennzeichnet, dass** die Lagerelemente (21) und/oder der Transportwagen (30) antreibbar sind.

10. Vorrichtung nach einem der Ansprüche 1 bis 9, **dadurch gekennzeichnet, dass** das Auflager (31) des Transportwagens (30) wenigstens ein Lagerelement aufweist, das in Höhe und/oder Neigung verstellbar ist.

11. Vorrichtung nach einem der Ansprüche 1 bis 10, **dadurch gekennzeichnet, dass** es sich bei dem Auffangbecken (11) um einen Container, insbesondere um eine Abrollcontainer, handelt, an dem bevorzugt wenigstens ein Element zur Vergrößerung der Grundfläche, besonders bevorzugt klappbar, angeordnet ist.

12. Vorrichtung nach einem der Ansprüche 1 bis 11, **dadurch gekennzeichnet, dass** das Bewässerungssystem wenigstens ein Sprühelement zur Staubbindung aufweist.

13. Vorrichtung nach einem der Ansprüche 1 bis 12, **dadurch gekennzeichnet, dass** das Auffangbecken (11) Abscheidelement (23) zum Abscheiden von beim Zerkleinern gelösten Partikeln aus der Flüssigkeit aufweist.

14. Vorrichtung nach einem der Ansprüche 1 bis 13, **dadurch gekennzeichnet, dass** ein Balken (18) oberhalb des Sägeseils (14) angeordnet ist, an dem das Sprühelement vorgesehen ist, der bevorzugt in Höhe und Neigung verstellbar ist und/oder der bevorzugt als Schutzelement im Hinblick auf ein Reißen des Sägeseils (14) ausgeführt ist.

15. Vorrichtung nach einem der Ansprüche 1 bis 14, **dadurch gekennzeichnet, dass** die Seilsäge (13) mindestens einen Seilspeicher (15) und/oder mindestens einen Seilspannelement aufweist.

## Claims

1. A mobile device (10) for crushing bulky goods having at least one fibre-reinforced plastic, more particularly rotor blades (100) for wind turbines, comprising at least one wire saw (13) with a diamond wire (14), an irrigation system for releasing a fluid for cooling the diamond wire (14), and a collecting tank (11) for collecting the fluid,
**characterised in that**
- a support (20) for the bulky goods is provided in the vicinity of the diamond wire (14), that the support (20) has at least one bearing element (21) that is configured as rollers and is adjustable in height and/or inclination, and that a movable transport cart (30) is provided which has a support (31) for an end of the bulky goods facing away from the vicinity of the diamond wire (14).

2. The device in accordance with Claim 1, **characterised in that** the diamond wire (14) is guided by means of wire pulleys (16).

3. The device in accordance with Claim 1 or 2, **characterised in that** the wire pulleys (16) are at least in part arranged in the vicinity of the collecting tank (11).

4. The device in accordance with any one of Claims 1 to 3, **characterised in that** the collecting tank (11) has a plurality of attachment points for the wire pulleys (16), preferably subject to the geometry of the bulky goods.

5. The device in accordance with any one of Claims 1 to 4, **characterised in that** at least two wire pulleys (16) are arranged at at least one movable carriage (24).

6. The device in accordance with Claim 5, **characterised in that** at least one carriage (24) is drivable.

7. The device in accordance with Claim 5 or 6, **characterised in that** at least one carriage (24) is provided above the bulky goods, preferably at a beam (18) above the diamond wire.

8. The device in accordance with any one of Claims 1 to 7, **characterised in that**, while being disaggregated, the bulky goods are lockable in the device (10) by means of a securing device which, preferably, is a press roller arranged above the support (20).

9. The device in accordance with any one of Claims 1 to 8, **characterised in that** the bearing elements (21) and/or the transport cart (30) are drivable.

10. The device in accordance with any one of Claims 1 to 9, **characterised in that** the support (31) of the transport cart (30) has at least one bearing element which is adjustable in height and/or inclination.

11. The device in accordance with any one of Claims 1 to 10, **characterised in that** the collecting tank (11) is a container, more specifically a roll-off container, with at least one element for increasing the base area being preferably arranged at said container, more preferably in a hinged manner.

12. The device in accordance with any one of Claims 1 to 11, **characterised in that** the irrigation system has at least one spray element for dust binding purposes.

13. The device in accordance with any one of Claims 1 to 12, **characterised in that** the collecting tank (11) has a separation element (23) for separating particles from the fluid that are dissolved during the crushing process.

14. The device in accordance with any one of Claims 1 to 13, **characterised in that** a beam (18) is arranged above the diamond wire (14) at which the spray element is provided, said beam preferably being adjustable in height and inclination and/or preferably being configured as a protective element with regard to a tearing of the diamond wire (14).

15. The device in accordance with any one of Claims 1 to 14, **characterised in that** the wire saw (13) has at least one wire storage device (15) and/or at least one wire tensioning element.

## Revendications

1. Dispositif mobile (10) de découpage d'objets encombrants comprenant au moins une matière plastique renforcée par des fibres, notamment de pales de rotor (100) pour éoliennes, avec au moins une scie à câble (13) avec un câble de scie (14), avec un système d'arrosage pour dégager un liquide pour refroidir le câble de scie (14), avec un bac collecteur (11) pour recueillir le liquide, **caractérisé en ce qu**'un support (20) pour l'objet encombrant est prévu au niveau du câble de scie (14), en ce que le support (20) présente au moins un élément d'appui (21) réalisé sous forme de galets et dont le positionnement en hauteur et/ou l'inclinaison sont réglables, et en ce qu'un chariot de transport (30) déplaçable est prévu, lequel présente un support (31) pour une extrémité de l'objet encombrant opposée à la zone du câble de scie (14).

2. Dispositif selon la revendication 1, **caractérisé en ce que** le câble de scie (14) est guidé au moyen de poulies de renvoi de câble (16).

3. Dispositif selon la revendication 1 ou 2, **caractérisé en ce que** les poulies de renvoi (16) sont en partie au moins agencées au niveau du bac collecteur (11).

4. Dispositif selon l'une des revendications 1 à 3, **caractérisé en ce que** le bac collecteur (11) présente plusieurs points de butée pour les poulies de renvoi (16), de préférence en fonction de la géométrie de l'objet encombrant.

5. Dispositif selon l'une des revendications 1 à 4, **caractérisé en ce que** deux poulies de renvoi (16) au moins sont respectivement agencées sur un chariot déplaçable (24).

6. Dispositif selon la revendication 5, **caractérisé en ce qu'**au moins un chariot (24) est entraînable.

7. Dispositif selon la revendication 5 ou 6, **caractérisé en ce qu**'au moins un chariot (24) est prévu au-dessus de l'objet encombrant, de préférence à une poutre (18) au-dessus du câble de scie.

8. Dispositif selon l'une des revendications 1 à 7, **caractérisé en ce que** l'objet encombrant peut, pendant le découpage, être fixé dans le dispositif (10) au moyen d'un dispositif d'arrêt, lequel est de préférence un galet presseur placé au-dessus du support (20).

9. Dispositif selon l'une des revendications 1 à 8, **caractérisé en ce que** les élément d'appui (21) et/ou le chariot de transport (30) sont entraînables.

10. Dispositif selon l'une des revendications 1 à 9, **caractérisé en ce que** le support (31) du chariot de transport (30) présente au moins un élément d'appui dont le positionnement en hauteur et/ou l'inclinaison sont réglables.

11. Dispositif selon l'une des revendications 1 à 10, **caractérisé en ce que** le bac collecteur (11) est un conteneur, notamment un conteneur roulant, lequel est de préférence doté d'au moins un élément d'agrandissement de la surface de base lequel est, de préférence particulière, agencé de façon rabattable.

12. Dispositif selon l'une des revendications 1 à 11, **caractérisé en ce que** le système d'arrosage présente au moins un élément asperseur.

13. Dispositif selon l'une des revendications 1 à 12, **caractérisé en ce que** le bac collecteur (11) présente un élément séparateur (23) pour extraire du liquide les particules dégagées lors du découpage.

14. Dispositif selon l'une des revendications 1 à 13, **caractérisé en ce qu**'au-dessus du câble de scie (14) est agencée une poutre (18) à laquelle est fixé l'élément asperseur, lequel est de préférence réglable en hauteur et dans son inclinaison et/ou de préférence réalisé sous forme d'élément de protection en cas de rupture du câble de scie.

15. Dispositif selon l'une des revendications 1 à 14, **caractérisé en ce que** la scie à câble (13) présente au moins un réservoir à câble (15) et/ou au moins un élément tendeur de câble.
